# FASCICULE DE BREVET EUROPEEN

(11) **EP 0 561 680 B1**
(45) Date de publication et mention de la délivrance du brevet: **28.05.1997**
(21) Numéro de dépôt: 93400648.7
(22) Date de dépôt: 15.03.1993
(51) Int. Cl.: G01P 5/00

(54) **Dispositif de mesure de vitesse axiale**
Vorrichtung zum Messen der axialen Geschwindigkeit
Apparatus for measuring axial speed

(30) Priorité: 16.03.1992 FR 9203089
(43) Date de publication de la demande: 22.09.1993
(73) Titulaire: SOCIETE EUROPEENNE DE SYSTEMES OPTIQUES S.E.S.O., 13792 Aix-en-Provence Cedex 3 (FR)
(72) Inventeur: de Mollerat du Jeu, Christian, F-13100 Aix en Provence (FR)
(74) Mandataire: Ramey, Daniel

(56) Documents cités:
- EP-A- 0 009 533
- EP-A- 0 467 127
- REV.SCI.INSTRUM. vol. 50, no. 1, Janvier 1979, NEW-YORK pages 73 - 78 W.F. HEMSING 'VELOCITY SENSING INTERFEROMETER (VISAR) MODIFICATION'

## Description

L'invention concerne un dispositif de mesure de vitesse axiale d'un corps ou milieu mobile, en particulier d'un gaz, ce dispositif étant du type comprenant une source lumineuse associée à une optique de collimation pour émettre un faisceau de rayons parallèles en direction d'une zone d'espace observée, et au moins un photodétecteur associé à une optique de focalisation pour recevoir un flux lumineux rétrodiffusé et délivrer un signal correspondant à l'intensité du flux lumineux reçu.

On a déjà utilisé des dispositifs de ce type pour déterminer la concentration d'un gaz présent dans une zone d'espace observée, à partir de l'absorption par le gaz du flux lumineux à certaines longueurs d'onde caractéristiques du gaz.

On a également proposé des systèmes du type "lidar" pour mesurer des paramètres météorologiques tels que l'altitude des nuages, la vitesse et la direction du vent, la température à des altitudes différentes, etc. Il faut pour cela utiliser soit plusieurs générateurs laser, soit plusieurs récepteurs, ou bien modifier les longueurs d'onde d'émission des générateurs laser et/ou les longueurs d'onde sur lesquelles sont accordés les récepteurs, ce qui se révèle souvent long et délicat dans la pratique.

L'invention a pour objet un dispositif simple, compact et précis qui permette de mesurer des vitesses axiales, en particulier de gaz, sans être soumis aux inconvénients précités.

L'invention propose, à cet effet, un dispositif de mesure de vitesse axiale, comprenant une source lumineuse associée à une optique de collimation pour émettre un faisceau de rayons parallèles dans une direction donnée, et au moins un photodétecteur associé à une optique de focalisation pour recevoir un flux lumineux rétrodiffusé et délivrer un signal correspondant à l'intensité du flux lumineux reçu, ce dispositif étant caractérisé en ce qu'un même système optique est utilisé pour l'émission du faisceau précité et la réception du flux lumineux rétrodiffusé, ce système optique comprenant un interféromètre de Perot-Fabry transformant le spectre du faisceau émis en spectre à raies et des moyens optiques de décalage spectral entre le faisceau lumineux émis et le flux lumineux rétrodiffusé.

Le décalage spectral produit dans le système optique du dispositif selon l'invention est défini par construction et est donc fixe. Selon les cas, le décalage spectral qui résulte de la composante de vitesse axiale d'une cible visée, s'ajoute ou se retranche au décalage spectral fixe produit dans le système optique. Le décalage spectral résultant, vu par un photodétecteur à travers l'interféromètre de Perot-Fabry, se traduit par une variation de l'intensité du signal de sortie de ce photodétecteur.

Le dispositif selon l'invention permet donc de mesurer le décalage spectral entre le faisceau émis et le flux rétrodiffusé, provoqué par la composante de vitesse de la cible le long de l'axe optique (effet Doppler), au moyen d'un seul interféromètre de Perot-Fabry et sans qu'il soit nécessaire de modifier les longueurs d'onde sur lesquelles cet interféromètre est accordé. De plus, les mesures réalisées sont indépendantes des variations d'accord de l'interféromètre de Perot-Fabry qui sont dues aux variations de température, du fait des trajets aller et retour de la lumière à travers cet interféromètre, qui permettent d'annuler les effets de ces variations.

Dans une première forme de réalisation de l'invention, les moyens de décalage spectral sont des moyens de déviation angulaire du faisceau émis et/ou du flux rétrodiffusé, ces moyens de déviation angulaire étant tels que le faisceau émis en sort parallèle à l'axe du système optique et que les angles d'incidence du faisceau émis et du flux rétrodiffusé, sur l'interféromètre de Perot-Fabry, sont différents l'un de l'autre.

Par exemple, ces moyens de déviation angulaire peuvent être constitués de prismes ou d'un miroir à facettes.

Un choix approprié des angles d'incidence du faisceau émis et du flux rétrodiffusé sur l'interféromètre de Perot-Fabry permet de mesurer une gamme étendue de vitesses, par exemple de - 250 à + 250 m/s environ, sans aucun réglage de l'interféromètre ou de ces angles d'incidence. Il en résulte une grande commodité d'utilisation du dispositif selon l'invention.

Typiquement, la différence entre les angles d'incidence précités est de l'ordre du milliradian.

Selon une autre caractéristique particulièrement avantageuse de l'invention, l'angle d'incidence du faisceau émis sur l'interféromètre de Perot-Fabry est non nul, et les moyens optiques de déviation comprennent trois zones de déviation différentes, dont l'une dirige le faisceau émis parallèlement à l'axe du système optique et dont les deux autres partagent le faisceau rétrodiffusé en deux fractions déviées de façon différente pour avoir des angles d'incidence différents sur l'interféromètre de Perot-Fabry, l'un de ces angles étant supérieur et l'autre inférieur à l'angle d'incidence du faisceau émis, le dispositif comprenant deux photodétecteurs sur lesquels sont focalisées ces fractions du faisceau rétrodiffusé en sortie de l'interféromètre de Perot-Fabry.

Dans ces conditions, un décalage spectral entre le faisceau émis et le flux rétrodiffusé, dû à une composante de vitesse du gaz le long de l'axe optique, va se traduire par une augmentation du flux rétrodiffusé reçu par l'un des photodétecteurs, et par une diminution du flux rétrodiffusé reçu par l'autre photodétecteur.

La variation du rapport de ces deux flux est représentative de la variation de la vitesse mesurée.

En faisant le rapport de la différence et de la somme des signaux fournis par les deux photodétecteurs, on obtient un signal qui correspond à la vitesse axiale du gaz et qui est indépendant des variations globales d'intensité des flux lumineux.

Dans une variante de l'invention, les moyens de décalage spectral comprennent des variations locales d'épaisseur de l'interféromètre de Perot-Fabry, dans les zones traversées par le faisceau émis et/ou par une partie du flux rétrodiffusé.

Ces variations locales d'épaisseur peuvent résulter d'un dépôt de silice sur le verre d'une lame de l'interféromètre. Typiquement, les surépaisseurs sont de l'ordre de la dizaine de nanomètres.

Dans cette variante, le faisceau émis et le flux rétrodiffusé restent parallèles entre eux et à l'axe du système optique.

Selon une autre caractéristique de l'invention, le système optique précité comprend également un filtre interférentiel, placé après les moyens optiques de décalage spectral dans la direction d'émission.

Ce filtre interférentiel permet de limiter la bande passante en longueurs d'onde et donc de réduire le bruit de fond.

La source de lumière utilisée est une diode laser continue ou pulsée, ou un générateur laser pulsé de faible puissance (quelques mW), ou une lampe, ou une lampe à éclair (flash). Typiquement, les impulsions émises ont une durée de quelques nanosecondes avec une fréquence de répétition qui peut être comprise entre 10 Hz et 10kHz.

De préférence, le système optique comprend également un objectif afocal pour l'émission du flux lumineux et pour la réception du flux rétrodiffusé. Quand le dispositif utilise une source de lumière pulsée, un seul objectif afocal est utilisé pour l'émission et la réception. Quand le dispositif utilise une source de lumière continue, il comprend un objectif afocal pour l'émission et un autre objectif afocal pour la réception, avec un diaphragme permettant de limiter la profondeur de champ, ces deux objectifs étant disposés côte-à-côte.

Avantageusement, le système optique comprenant l'interféromètre de Perot-Fabry, les moyens optiques de décalage spectral et le filtre interférentiel est porté par un chassis comprenant des cloisons opaques isolant les uns des autres le faisceau lumineux émis et les flux rétrodiffusés.

Les sorties des photodétecteurs sont reliées à un système de traitement de l'information qui est programmé pour calculer une vitesse parallèlement à l'axe du système optique à partir des signaux fournis par ces photodétecteurs.

En particulier, l'invention permet, en utilisant une diode laser dont la puissance est de l'ordre du milliWatt, de mesurer des vitesses de vent à des distances comprises entre 10 et 100 m environ, ces vitesses étant radiales par rapport au point d'observation.

Elle est également applicable à la mesure de vitesses axiales d'un milieu quelconque tel par exemple que la vapeur d'eau ou un aérosol, ou d'un corps mobile tel qu'un engin volant.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 représente schématiquement un mode de réalisation préféré du dispositif selon l'invention;
la figure 2 est un graphe représentant l'allure, en fonction de la longueur d'onde, du spectre du faisceau lumineux émis par le dispositif;
la figure 3 est un graphe représentant l'allure, en fonction de la longueur d'onde, des spectres des flux lumineux transmis vers les photodétecteurs;
la figure 4 est une vue semblable à la figure 1 et représente une variante de l'invention.

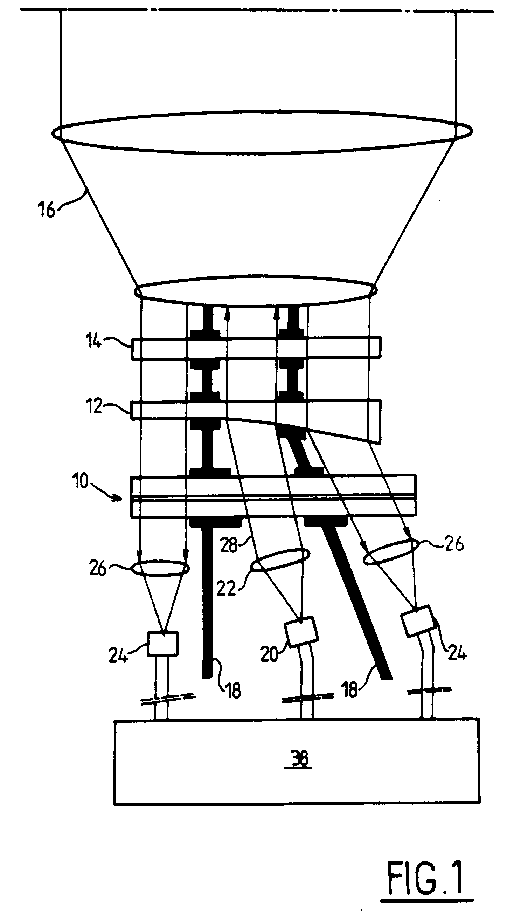

Le dispositif selon l'invention représenté en figure 1, comprend essentiellement un système optique centré, constitué d'un interféromètre de Perot-Fabry désigné par la référence 10, d'un moyen optique 12 de déviation des faisceaux lumineux, formé par un prisme dans l'exemple représenté, d'un filtre interférentiel 14 et, de préférence, d'un objectif afocal 16, les axes de l'interféromètre 10, du filtre interférentiel 14 et de l'objectif afocal 16 étant confondus.

Ces éléments sont portés et positionnés par un chassis comprenant des cloisons opaques 18 qui délimitent, dans le système optique, une voie centrale de transmission du faisceau lumineux émis par une source de lumière 20 associée à une optique de collimation 22, et deux voies latérales de transmission du flux rétrodiffusé vers des photodétecteurs 24 associés à des optiques de focalisation 26.

Le faisceau lumineux émis par la source 20 et sortant de l'optique 22 est un faisceau de rayons parallèles, attaquant l'interféromètre 10 de Perot-Fabry avec un angle d'incidence faible par rapport à l'axe du système optique. Ce faisceau lumineux 28 est, en sortie de l'interféromètre 10, transformé en un faisceau à spectre à raies dont l'axe est redressé par le prisme 12 pour être parallèle à l'axe du système optique et traverser le filtre interférentiel 14 avec une incidence nulle.

Le faisceau lumineux sortant du filtre interférentiel 14 et de l'objectif afocal 16 est rétrodiffusé par des particules en suspension dans l'air (diffusion Mie) ou par des molécules de gaz (diffusion Rayleigh) dans la zone d'espace visée, et une partie du flux rétrodiffusé est captée par l'objectif afocal 16 et transmise par le filtre interférentiel 14, le prisme 12 et l'interféromètre 10 de Perot-Fabry aux photodétecteurs 24, sur lesquels elle est focalisée par les optiques 26.

Comme on l'a représenté de façon exagérée en figure 1, le prisme 12 comprend trois zones de déviation différentes, dont une zone centrale qui est traversée par le faisceau émis 28 et qui dirige ce faisceau parallèlement à l'axe du système optique, et deux zones latérales, dont l'une transmet sans le dévier le flux rétrodiffusé et dont l'autre transmet le flux rétrodiffusé en le déviant de façon plus importante que le faisceau émis.

En d'autres termes, l'angle d'incidence du faisceau lumineux émis 28 sur l'interféromètre 10 de Perot-Fabry est plus important que l'angle d'incidence sur cet interféromètre du flux rétrodiffusé en direction du photodétecteur 24 de gauche, et est plus faible que l'angle d'incidence sur cet interféromètre du flux rétrodiffusé en direction du photodétecteur 24 de droite.

Il en résulte qu'un décalage spectral entre le faisceau émis et le flux rétrodiffusé (ce décalage spectral étant dû à une vitesse des particules ou molécules rétrodiffusantes dans l'axe du système optique) va se traduire par une variation des intensités des flux lumineux reçus par les deux détecteurs 24, le flux reçu par l'un des photodétecteurs augmentant, tandis que le flux reçu par l'autre photodétecteur diminue.

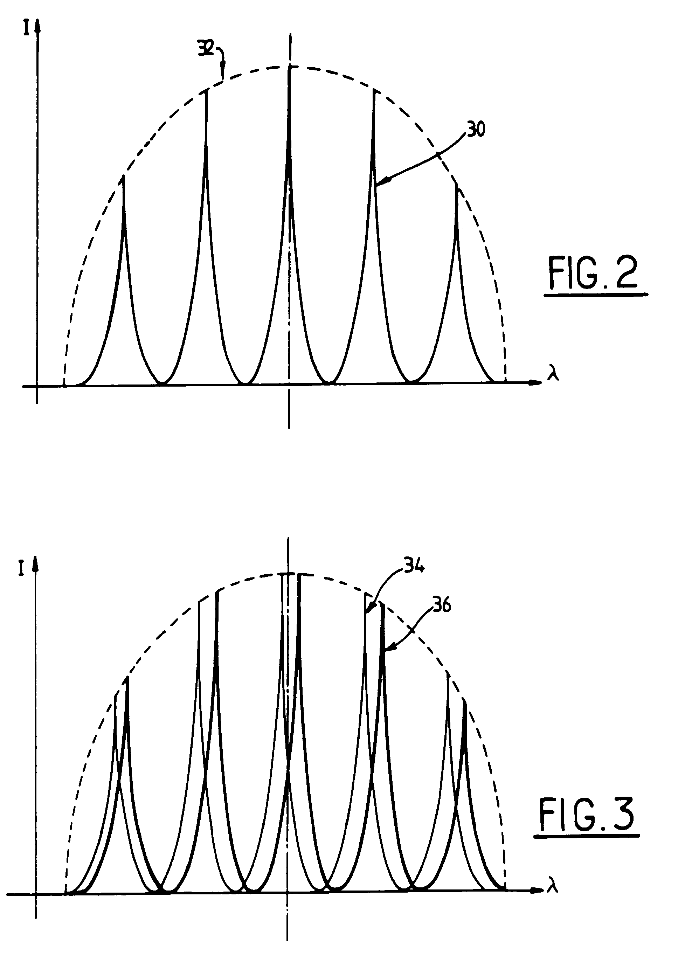

Cette notion va être expliquée plus en détail en référence aux figures 2 et 3.

La figure 2 représente schématiquement, en fonction de la longueur d'onde λ, le spectre du faisceau lumineux émis par le dispositif selon l'invention en direction d'une zone d'espace observée.

Ce spectre émis est un spectre à raies 30, résultant de la transformation, par l'interféromètre 10 de Perot-Fabry, du spectre continu émis par la source de lumière 20. Ce spectre à raies est limité, en intensité et en longueur d'onde, par le filtre interférentiel 14, comme indiqué en 32 en figure 2.

La largeur en longueur d'onde du spectre à raies 30 est de l'ordre de quelques nanomètres, la source de lumière 20 étant par exemple une diode laser ou un générateur laser de faible puissance pompé par diode.

La figure 3 représente, en fonction de la longueur d'onde, les spectres de transmission par l'interféromètre 10 de Perot-Fabry vers les photodétecteurs, la référence 34 désignant par exemple le spectre de transmission vers le photodétecteur 24 de gauche, et la référence 36 désignant le spectre de transmission vers le photodétecteur de droite. Les raies de ces deux spectres 34 et 36 sont décalées à gauche et à droite respectivement des raies du spectre d'émission 30, et par exemple de façon sensiblement symétrique, en raison des angles d'incidence progressivement croissants, sur l'interféromètre de Perot-Fabry, du flux rétrodiffusé reçu par le photodétecteur de gauche, du flux émis par la source lumineuse 20 et son optique de collimation, et du flux rétrodiffusé reçu par le photodétecteur de droite, respectivement.

Lorsque les particules ou molécules rétrodiffusantes n'ont pas de composante de vitesse relative le long de l'axe du système optique, par rapport au dispositif selon l'invention, il n'y a pas de décalage spectral en longueur d'onde entre le spectre lumineux émis et le spectre lumineux rétrodiffusé. Les flux lumineux rétrodiffusés transmis par l'interféromètre de Perot-Fabry aux photodétecteurs 24 ont alors certaines valeurs d'intensité.

Quand les particules ou molécules rétrodiffusantes ont une composante de vitesse relative le long de l'axe du système optique par rapport au dispositif selon l'invention, il se produit un décalage spectral entre les raies du spectre émis et celles du spectre rétrodiffusé (effet Doppler). Ce décalage a lieu dans un sens ou dans l'autre en fonction du sens de cette composante de vitesse relative. Le spectre du flux rétrodiffusé est ainsi décalé, par rapport au spectre du faisceau émis, soit du côté du spectre 34, soit du côté du spectre 36. Cela a pour effet d'augmenter le flux rétrodiffusé transmis par l'interféromètre 10 vers l'un des photodétecteurs, et de diminuer le flux rétrodiffusé transmis par l'interféromètre vers l'autre photodétecteur.

La variation du rapport des signaux fournis par les photodétecteurs est représentative de la valeur de la composante axiale de vitesse relative des particules ou molécules rétrodiffusantes et du sens de cette composante.

On peut également utiliser le rapport de la différence et de la somme de ces signaux.

Les sorties des photodétecteurs sont en pratique reliées aux entrées d'un système 38 de traitement de l'information (figure 1) qui est programmé pour traiter les signaux de sortie des photodétecteurs et également pour commander le fonctionnement de la source de lumière 20.

Dans le cas d'une source de lumière pulsée, celle-ci émet typiquement des impulsions d'une durée de quelques nanosecondes, sur une longueur d'onde comprise entre 650 et 900 mm, avec une fréquence de répétition qui peut varier entre 10 Hz et 10kHz.

De façon classique, la distance entre le dispositif selon l'invention et la zone où se trouvent les particules ou molécules rétrodiffusantes dont on mesure la vitesse, est déterminée à partir du temps de trajet aller et retour de la lumière.

Pour s'affranchir totalement du bruit ambiant, on mesure les signaux de sortie des photodétecteurs pendant les périodes où la source de lumière 20 n'émet pas, et on soustrait ensuite ce bruit mesuré des signaux de sortie des photodétecteurs correspondant à la rétrodiffusion des impulsions lumineuses émises par la source. Le système de traitement de l'information 38 est par ailleurs programmé pour réaliser un moyennage temporel des mesures effectuées, pour accroître la précision de ces mesures.

Dans le cas d'une source de lumière continue, celle-ci émet avec une puissance de quelques dizaines de mW dans le spectre UV ou visible. De façon classique, la distance entre le dispositif et la zone de mesure est déterminée par la profondeur de champ de l'objectif afocal de réception.

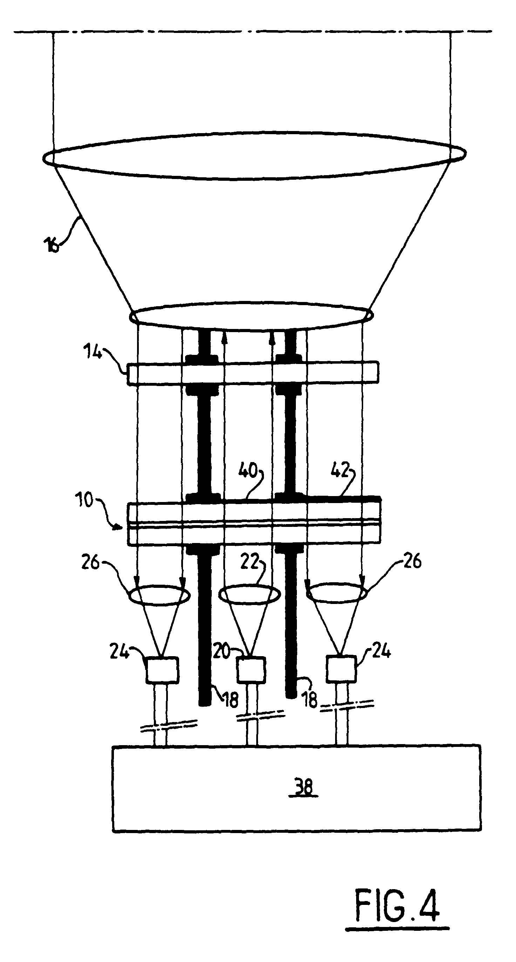

La figure 4 représente une variante du dispositif selon l'invention, dans laquelle le faisceau lumineux émis par la source 20 et traversant l'interféromètre 10 de Perot-Fabry, et les fractions du flux lumineux rétrodiffusé capté par le système optique sont parallèles à l'axe du système optique, le décalage spectral dans le système optique étant alors provoqué par des variations locales d'épaisseur d'une lame de verre de l'interféromètre de Perot-Fabry.

Le dispositif de la figure 4 comprend donc sensiblement les mêmes éléments que celui de la figure 1, à l'exception du prisme 12. L'optique 22 de collimation du faisceau émis et les optiques 26 de focalisation des fractions du flux rétrodiffusé ont leurs axes parallèles à l'axe du système optique constitué par l'interféromètre 10, le filtre interférentiel 14 et l'objectif afocal 16.

Une partie centrale de l'interféromètre 10 traversée par le faisceau lumineux collimaté sortant de l'optique 22, comporte une surépaisseur locale désignée par la référence 40 et formée par exemple par dépôt de silice sur une lame de verre de l'interféromètre. De même, la partie de l'interféromètre 10, qui est traversée par la fraction du flux rétrodiffusé dirigée sur le photodétecteur 24 de droite, comporte une surépaisseur locale 42, supérieure à la surépaisseur locale 40 de la partie centrale de l'interféromètre.

Les surépaisseurs locales 40 et 42 de la lame de verre de l'interféromètre produisent exactement le même effet que les moyens 12 de déviation angulaire de la réalisation de la figure 1. Le fonctionnement du dispositif représenté en figure 4 est donc identique à celui du dispositif représenté en figure 1.

Le dispositif selon l'invention forme un bloc très compact, ce qui permet de le faire pivoter sans difficultés pour le balayage d'une zone d'espace relativement importante.

Par ailleurs, cette compacité permet également de le monter à bord d'un engin mobile (tel qu'un véhicule, un bateau, avion ou hélicoptère par exemple).

L'invention prévoit également d'utiliser un nombre de photodétecteurs supérieur à deux, par exemple égal à trois lorsqu'on désire déterminer la température de l'atmosphère à une altitude donnée, les variations de température se traduisant par des variations de largeur des raies du spectre rétrodiffusé qui se traduisent elles-mêmes par des variations des intensités des signaux de sortie des photodétecteurs.

Le dispositif selon l'invention peut ne comprendre qu'un photodétecteur de réception du flux rétrodiffusé. Dans ce cas, seul le faisceau émis ou le faisceau rétrodiffusé est décalé spectralement par le système optique. La mesure peut porter alors sur les fluctuations du signal rétrodiffusé et permet, avec un traitement de signal approprié, de déterminer le niveau de turbulence de l'air ou la présence d'aérosols.

## Revendications

1. Dispositif de mesure de vitesse axiale comprenant une source lumineuse (20) associée à une optique de collimation (22) pour émettre un faisceau (28) de rayons parallèles dans une direction donnée, et au moins un photodétecteur (24) associé à une optique de focalisation (26) pour recevoir un flux lumineux rétrodiffusé et délivrer un signal correspondant à l'intensité du flux lumineux reçu, caractérisé en ce qu'un même système optique (10, 12, 14) est utilisé pour l'émission du faisceau (28) précité et la réception du flux lumineux rétrodiffusé, ce système optique comprenant un interféromètre (10) de Perot-Fabry transformant le spectre du faisceau émis en spectre à raies, et des moyens optiques (12) de décalage spectral entre le faisceau lumineux émis et le flux lumineux rétrodiffusé.

2. Dispositif selon la revendication 1, caractérisé en ce que les moyens de décalage spectral comprennent des moyens de déviation angulaire du faisceau émis et/ou du flux rétrodiffusé, ces moyens de déviation angulaire étant tels que le faisceau émis en sort parallèle à l'axe du système optique et que les angles d'incidence du faisceau émis et du flux rétrodiffusé, sur l'interféromètre de Perot-Fabry, sont différents l'un de l'autre.

3. Dispositif selon la revendication 2, caractérisé en ce que la différence des angles d'incidence précités est de l'ordre du milliradian.

4. Dispositif selon la revendication 2 ou 3, caractérisé en ce que l'angle d'incidence du faisceau émis (28) sur l'interféromètre (10) de Perot-Fabry est non nul et en ce que les moyens optiques (12) de déviation comprennent trois zones de déviation différentes, dont l'une dirige le faisceau émis parallèlement à l'axe du système optique et dont les deux autres partagent le flux rétrodiffusé en deux fractions déviées de façon différente pour avoir des angles d'incidence différents sur l'interféromètre de Perot-Fabry, l'un des ces angles étant supérieur et l'autre inférieur à l'angle d'incidence du faisceau émis, le dispositif comprenant deux photodétecteurs sur lesquels sont focalisées ces fractions du flux rétrodiffusé en sortie de l'interféromètre de Perot-Fabry.

5. Dispositif selon l'une des revendications 2 à 4, caractérisé en ce que les moyens optiques (12) de déviation angulaire sont constitués de prismes ou d'un miroir à facettes.

6. Dispositif selon la revendication 1, caractérisé en ce que les moyens de décalage spectral comprennent des variations locales d'épaisseur de l'interféromètre de Perot-Fabry dans les zones traversées par le faisceau émis et/ou par une partie du flux rétrodiffusé.

7. Dispositif selon l'une des revendications précédentes, caractérisé en ce que le système optique comprend également un filtre interférentiel (14) placé après les moyens optiques (12) de décalage spectral dans la direction d'émission.

8. Dispositif selon l'une des revendications précédentes, caractérisé en ce que le système optique comprend également au moins un objectif afocal (16) d'émission et de réception.

9. Dispositif selon l'une des revendications précédentes, caractérisé en ce que le système optique (10, 12, 14) est porté par un chassis comprenant des cloisons opaques (18) isolant les uns des autres le faisceau lumineux émis et les flux rétrodiffusés.

10. Dispositif selon l'une des revendications précédentes, caractérisé en ce que la source de lumière (20) est une diode laser continue ou pulsée ou un générateur laser pulsé de faible puissance.

11. Dispositif selon l'une des revendications précédentes, caractérisé en ce que la source de lumière pulsée (20) émet des impulsions ayant une durée de quelques nanosecondes avec une fréquence de répétition de l'ordre de 10 Hz à 10kHz.

12. Dispositif selon l'une des revendications précédentes, caractérisé en ce que les sorties des photodétecteurs (24) sont reliées à un système (38) de traitement de l'information, programmé pour calculer une vitesse parallèlement à l'axe du système optique à partir des signaux fournis par les photodétecteurs (24).

13. Dispositif selon l'une des revendications précédentes, caractérisé en ce qu'il comprend des moyens de mesure des variations de largeur des raies du flux rétrodiffusé, ces moyens comprenant un troisième photodétecteur recevant une troisième fraction du flux rétrodiffusé.

14. Dispositif selon l'une des revendications précédentes, caractérisé en ce qu'il forme un ensemble compact orientable pour le balayage d'une zone d'espace.

## Patentansprüche

1. Vorrichtung zum Messen einer axialen Geschwindigkeit, welche aufweist: eine Lichtquelle (20), welche einer Kollimationsoptik (22) für die Abgabe eines Bündels (28) von parallelen Strahlen in eine vorgegebene Richtung zugeordnet ist, und wenigstens einen Photodetektor (24), welcher einer Fokussierungsoptik (26) für den Empfang eines rückgestreuten Lichtflusses sowie zum Liefern eines von der Intensität des empfangenen Lichtflusses abhängigen Signals zugeordnet ist,
**dadurch gekennzeichnet, da**ß
ein ebensolches optisches System (10, 12, 14) für die Abgabe des genannten Bündels (28) und den Empfang des rückgestreuten Lichtflusses verwendet wird, wobei das optische System ein das Spektrum des abgegebenen Bündels in ein Linienspektrum umwandelndes Pérot-Fabry-Interferometer (10) sowie optische Einrichtungen (12) für die Spektralverschiebung zwischen dem abgegebenen Lichtbündel und dem rückgestreuten Lichtfluß aufweist.

2. Vorrichtung nach Anspruch 1, dadurch gekennzeichnet, daß die Einrichtungen für die Spektralverschiebung Einrichtungen für die Winkelablenkung des abgegebenen Bündels und/oder des rückgestreuten Flusses aufweist, wobei die Einrichtungen für die Winkelablenkung derart ausgelegt sind, daß das abgegebene Bündel parallel zur Achse des optischen Systems daraus austritt, und daß die Einfallswinkel des abgegebenen Bündels und des rückgestreuten Flusses auf dem Pérot-Fabry-Interferometer voneinander verschieden sind.

3. Vorrichtung nach Anspruch 2, dadurch gekennzeichnet, daß der Unterschied zwischen den genannten Einfallswinkeln in der Größenordnung eines Milliradianten liegt.

4. Vorrichtung nach Anspruch 2 oder 3, dadurch gekennzeichnet, daß der Einfallswinkel des abgegebenen Bündels (28) auf dem Pérot-Fabry-Interferometer (10) nicht gleich Null ist, und daß die optischen Ablenkeinrichtungen (12) drei voneinander unterschiedliche Ablenkzonen aufweisen, von denen eine das abgegebene Bündel parallel zur Achse des optischen Systems ausrichtet, und die beiden anderen den rückgestreuten Fluß in zwei auf unterschiedliche Weisen abgelenkte Fraktionen aufteilen, um unterschiedliche Einfallswinkel auf dem Pérot-Fabry-Interferometer zu erhalten, wobei einer dieser Winkel größer und der andere kleiner als der Einfallswinkel des abgegebenen Bündels ist, und wobei die Vorrichtung zwei Photodetektoren aufweist, auf welche diese Fraktionen des rückgestreuten Flusses beim Austritt aus dem Pérot-Fabry-Interferometer fokussiert werden.

5. Vorrichtung nach einem der Ansprüche 2 bis 4, dadurch gekennzeichnet, daß die optischen Einrichtungen (12) für die Winkelablenkung aus Prismen bzw. einem Facettenspiegel bestehen.

6. Vorrichtung nach Anspruch 1, dadurch gekennzeichnet, daß die Einrichtungen für die Spektralverschiebung in denjenigen Zonen, welche von dem abgegebenen Bündel und/oder einem Teil des rückgestreuten Flusses durchlaufen werden, örtlich begrenzte Dickenunterschiede des Pérot-Fabry-Interferometers aufweisen.

7. Vorrichtung nach einem der vorhergehenden Ansprüche, dadurch gekennzeichnet, daß das optische System des weiteren ein den optischen Einrichtungen (12) für die Spektralverschiebung in Abgaberichtung nachgeschaltetes Interferenzfilter (14) aufweist.

8. Vorrichtung nach einem der vorhergehenden Ansprüche, dadurch gekennzeichnet, daß das optische System des weiteren mindestens ein afokales bzw. brennpunktloses Objektiv (16) für die Abgabe und den Empfang aufweist.

9. Vorrichtung nach einem der vorhergehenden Ansprüche, dadurch gekennzeichnet, daß das optische System (10, 12, 14) von einem Gestell mit lichtundurchlässigen Zwischenwänden (18) getragen ist, welches das abgegebene Lichtbündel und die rückgestreuten Ströme voneinander isoliert.

10. Vorrichtung nach einem der vorhergehenden Ansprüche, dadurch gekennzeichnet, daß die Lichtquelle (20) eine kontinuierliche oder gepulste Laserdiode oder ein gepulster Lasergenerator mit geringer Leistung ist.

11. Vorrichtung nach einem der vorhergehenden Ansprüche, dadurch gekennzeichnet, daß die gepulste Lichtquelle (20) Impulse mit einer Dauer von einigen Nanosekunden mit einer Wiederholfrequenz in der Größenordnung von 10 Hz bis 10 kHz abgibt.

12. Vorrichtung nach einem der vorhergehenden Ansprüche, dadurch gekennzeichnet, daß die Ausgänge der Photodetektoren (24) mit einem Informationsverarbeitungssystem (38) verbunden sind, welches dazu programmiert ist, eine Geschwindigkeit parallel zur Achse des optischen Systems ausgehend von den Signalen, welche von den Photodetektoren (24) geliefert werden, zu berechnen.

13. Vorrichtung nach einem der vorhergehenden Ansprüche, dadurch gekennzeichnet, daß sie Einrichtungen zur Messung der Schwankungen der Linienbreiten des rückgestreuten Flusses aufweist, wobei diese Einrichtungen einen dritten Photodetektor aufweisen, der eine dritte Fraktion des rückgestreuten Flusses empfängt.

14. Vorrichtung nach einem der vorhergehenden Ansprüche, dadurch gekennzeichnet, daß sie einen kompakten, ausrichtbaren Aufbau zum Abtasten einer Raumzone darstellt.

## Claims

1. An axial speed-measuring device comprising a light source (20) associated with collimating optics (22) for emitting a beam (28) of parallel rays in a given direction, and at least one photodetector (24) associated with focusing optics (26) to receive backscattered light flux and to deliver a signal corresponding to the intensity of the received light flux, the device being characterized in that the same optical system (10, 12, 14) is used both for emitting the above-specified beam (28) and for receiving the backscattered light flux, said optical system comprising a Fabry-Perot interferometer (10) transforming the spectrum of the emitted beam into a line spectrum, and spectrum offset optical means (12) for providing a spectrum offset between the emitted light beam and the backscattered light flux.

2. A device according to claim 1, characterized in that the spectrum offset means comprise angular deflection means for deflecting the emitted beam and/or the back-scattered flux, said angular offset means being such that the emitted beam leaves parallel to the axis of the optical system and that the angles of incidence of the emitted beam and of the backscattered flux on the Fabry-Perot interferometer are different from each other.

3. A device according to claim 2, characterized in that the difference between the above-mentioned angles of incidence is of the order of a milliradian.

4. A device according to claim 2 or 3, characterized in that the angle of incidence of the emitted beam (28) on the Fabry-Perot interferometer (10) is non-zero and in that the deflection optical means (12) comprise three different deflection zones, one of which directs the emitted beam parallel to the axis of the optical system and the other two of which share the backscattered flux into two differently-deflected fractions so as to have different angles of incidence on the Fabry-Perot interferometer, one of said angles being greater than and the other of said angles being less than the angle of incidence of the emitted beam, the device comprising two photodetectors onto which said fractions of backscattered flux are focused on leaving the Fabry-Perot interferometer.

5. A device according to any one of claims 2 to 4, characterized in that the angular deflection optical means (12) are constituted by prisms or by a mirror having facets.

6. A device according to claim 1, characterized in that the spectrum offset means comprise local variations in the thickness of the Fabry-Perot interferometer in the zones through which the emitted beam and/or a fraction of the backscattered flux pass.

7. A device according to any preceding claim, characterized in that the optical system also includes an interference filter (14) placed after the spectrum offset optical means (12) in the emission direction.

8. A device according to any preceding claim, characterized in that the optical system also comprises at least one afocal objective lens (16) for emission and for reception.

9. A device according to any preceding claim, characterized in that the optical system (10, 12, 14) is carried on a chassis that includes opaque partitions (18) isolating the emitted light beam and the backscattered fluxes from one another.

10. A device according to any preceding claim, characterized in that the light source (20) is a low power pulsed laser generator or a pulsed or continuous laser diode.

11. A device according to any preceding claim, characterized in that the pulsed light source (20) emits pulses having a duration of a few nanoseconds, at a repetition frequency of the order of 10 Hz to 10 kHz.

12. A device according to any preceding claim, characterized in that the outputs from the photodetectors (24) are connected to a data processing system (38) programmed to calculate a speed parallel to the axis of the optical system on the basis of the signals provided by the photodetectors (24).

13. A device according to any preceding claim, characterized in that it comprises means for measuring variations in the width of the lines in the backscattered flux, said means comprising a third photodetector receiving a third fraction of the backscattered flux.

14. A device according to any preceding claim, characterized in that it forms a compact assembly that is pointable to scan a volume.
